Europäisches Patentamt

(19) European Patent Office

Office européen des brevets

(11) Numéro de publication: **0 050 299**
**B1**

(12) **FASCICULE DE BREVET EUROPEEN**

(45) Date de publication du fascicule du brevet: 10.06.87

(21) Numéro de dépôt: **81108275.9**

(22) Date de dépôt: **13.10.81**

(51) Int. Cl.⁴: **G 01 V 3/10**; G 08 B 25/00

(54) **Procédé et système de détection notamment pour installations de surveillance ou automatismes.**

(30) Priorité: 20.10.80 FR 8022418

(43) Date de publication de la demande:
28.04.82 Bulletin 82/17

(45) Mention de la délivrance du brevet:
10.06.87 Bulletin 87/24

(84) Etats contractants désignés:
AT BE CH DE GB IT LI LU NL SE

(56) Documents cités:
EP-A-0 003 178
DE-A-2 845 718
FR-A-1 429 786
FR-A-2 143 521
FR-A-2 195 811
FR-A-2 291 554
GB-A-1 116 712
US-A-3 230 454
US-A-3 858 194
US-A-4 000 459

PROCEEDINGS OF THE CARNAHAM
CONFERENCE ON CRIME
COUNTERMEASURES, 6-8 avril 1977,

(73) Titulaire: **Morey, Gilles Marcel**
**139 rue de la Cascade Crolles**
**F-38190 Brignoud (FR)**

(72) Inventeur: **Morey, Gilles Marcel**
**139 rue de la Cascade Crolles**
**F-38190 Brignoud (FR)**

(74) Mandataire: **Casalonga, Axel et al**
**BUREAU D.A. CASALONGA OFFICE JOSSE &**
**PETIT Morassistrasse 8**
**D-8000 München 5 (DE)**

(56) References cited:
**Kentucky, US. J. H. BUDIANSKY: "Portable RF**
**Alarm Link System", pages 217-220**
**Techniques de l'ingénieur, MESURES et**
**CONTROLE, Vol. R4, p. R1901-10**

EP 0 050 299 B1

Courier Press, Leamington Spa, England.

## Description

La présente invention concerne un procédé et un système pour la détection électromagnétique de la position d'une corps tel qu'un objet métallique et la transmission par voie radioélectrique à un dispositif d'exploitation d'un signal relatif aux mouvements ou à la position dudit corps, s'appliquant en particulier aux installations de surveillance ou aux automatismes centralisés.

Dans le domaine de la détection de position de corps, on connaît le système télémétrique LORAN C qui comprend plusieurs émetteurs fixes et un ou plusieurs objets mobiles portant un récepteur qui est susceptible d'interpréter les signaux qu'il reçoit de l'ensemble des émetteurs afin de déduire qu'elle est la position de l'objet porteur du récepteur. On connaît en outre par le brevet français 2 143 553 un système optique de mesure de décalage de marches entre deux horloges qui comprend un émetteur placé dans l'une des horloges et un récepteur-réflecteur du signal émis placé dans la seconde horloge, le récepteur de la seconde horloge étant capable de déduire des impulsions reçues de l'émetteur de la première horloge d'une part la distance de la première horloge par rapport à la deuxième et d'autre par, par calcul, le décalage de marche de la seconde horloge par rapport à l'horloge émettrice. Dans ces deux systèmes connus, l'objet dont on détermine la position, la distance, ou le déplacement par rapport à un ou plusieurs émetteurs est obligatoirement muni d'un récepteur.

Dans le domaine des capteurs statiques inductifs, on connaît actuellement des dispositifs visant essentiellement à augmenter la sécurité de détection en associant un émetteur et un détecteur séparés et dans lesquels, par exemple, l'émetteur sert d'objet à détecter ou dans lesquels l'émetteur et le récepteur sont couplés par un transmetteur passif ou encore dans lesquels l'objet à détecter vient perturber le couplage électromagnétique entre l'émetteur et le récepteur. Dans chacun de ces exemples, le capteur de proximité inductif comprend deux dispositifs séparés réalisant l'un la fonction d'émission et l'autre la fonction de détection. Dans ces exemples, l'émetteur soit n'est pas modulé soit est modulé de manière invariable indépendamment de l'état électromagnétique de son environnement. En outre, l'information indiquant la présence ou l'absence de l'objet à détecter est fonction de l'amplitude du signal reçu par le récepteur-détecteur, la modulation permanente invariable n'étant là que pour singulariser celui-ci.

Par ailleurs, on connaît également des installations de surveillance ou des automatismes centralisés dans lesquels les informations qui leur sont nécessaires sont transmises par des liaisons câblés, que ce soit selon des structures en boucles ou point-à-point. Les liaisons câblés reliant les différentes parties de ces systèmes classiques connus ont l'avantage d'être simples, de technique connue et fiable. Cependant, le coût de l'installation de ces liaisons est très souvent supérieur au coût total du matériel mis en oeuvre pour la détection et le traitement des informations, ce que finalement rend les systèmes câblés très onéreux. Ce coût est un désavantage dans le domaine de la protection contre les instrusions dans les lieux à petits risques, tels que bureaux, magasins et habitations, domaine où le coût global de l'installation est un des paramètres essentiels.

Le procédé et le dispositif, objets de la présente invention ont pour but de remédier aux inconvénients de l'état de la technique et doivent permettre de réaliser de substantielles économies sur le prix de revient final des systèmes intallés tout en bénéficiant de la fiabilité accrue résultant de la mise en oeuvre de dispositifs entièrement statiques.

Tel qu'il est revendiqué le procédé selon la présente invention permet la détection électromagnétique de la position d'un corps par rapport à un oscillateur électromagnétique et la transmission par voie radio-électrique à un dispositif d'exploitation d'un signal relatif aux mouvements ou à la position dudit corps. Selon la présente invention, le procédé consiste à déceler la variation d'amplitude des oscillations dudit oscillateur provoquée par un déplacement du corps s'éloignant d'une position déterminée initiale pour laquelle l'oscillateur se trouvait dans un premier état de fonctionnement; á modifier ce premier état de fonctionnement en réponse á la variation d'amplitude décelée de façon á placer l'oscillateur dans un deuxième état de fonctionnement; et à recevoir sur le dispositif d'exploitation les signaux radioélectrique émis par ledit oscillateur pour en déduire des informations sur le déplacement et/ou la position du corps par rapport à sa position initiale qui correspondent aux premier et deuxième états de fonctionnement de l'oscillateur.

Une forme particulière de mise en oeuvre de l'invention consiste à modifier l'état de fonctionnement de l'oscillateur suite ä ladite variation d'amplitude due à un changement de position du corps ou en fonction de la position de celui-ci par rapport à l'oscillateur, une première et une seconde modulations d'amplitude, de fréquence ou de phase, ou des combinaisons de celles-ci étant respectivement associées aux premier et second états de fonctionnement de l'oscillateur.

Le fait de déceler la variation de l'amplitude de l'onde électromagnétique rayonné par l'oscillateur due au déplacement du corps dans le champ de détection de celui-ci provoque donc, par rebouclage ou réaction, une modification de l'état de fonctionnement dudit oscillateur.

On observe par ailleurs que le procédé de la présente invention permet de n'utiliser qu'un seul oscillateur électromagnétique capable d'effectuer d'une part la détection de position recherchée et d'autre part l'émission de signaux radioélectriques ou électromagnétiques qui pourront être interprétés, à distance, par le dispositif d'exploitation. Il est ainsi possible de réaliser de substantielles économies par rapport à des installations de protection ou des automatismes centralisés classiques, d'une part en remplaçant les liaisons câblées entre les capteurs et l'organe d'exploitation par des liaisons radioélectriques, et d'autre part en combinant les fonctions de détection de position et de transmission en un seul dispositif oscillatur.

Par ailleurs, les informations reçues et interprétées par le dispositif d'exploitation dépendent, comme indiqué plus haut, de l'état de fonctionnement de l'oscillateur et non de la variation d'amplitude consécutive au déplacement du corps dans le champ de détection de l'oscillateur. Cette caractéristique permet d'augmenter considérablement la distance de transmission possible, et ceci sans avoir à réguler l'amplitude des oscillations de l'oscillateur.

De préférence, le procédé selon la présente invention est tel que, suite à un changement de position dudit corps, on modifie temporairement l'état de fonctionnement de l'oscillateur. Ainsi, le changement de position dudit corps par rapport à l'oscillateur provoque le second état de fonctionnement de manière transitoire ou temporaire. Ce second état temporaire de fonctionnement de l'oscillateur peut par exemple correspondre à des signaux "alarme" qui seront convenablement interprétés par le dispositif d'exploitation.

Selon une autre variante du procédé selon la présente invention, on modifie temporairement l'état de fonctionnement de l'oscillateur, cette modification temporaire étant conditionnée par le type et/ou la durée du premier état de fonctionnement de l'oscillateur. Ainsi, cette possibilité de conditionner le second état de fonctionnement par la durée du premier état de fonctionnement permet, par exemple, d'éviter l'émission de signaux d'alarme répétitifs dans le cas où, dans une application telle qu'une installation de protection périphérique, une porte ou une fenêtre battrait en permanence sous l'action de courants d'air ou de vibrations mécaniques.

Selon une variante préférée du procédé conforme à la présent invention, son dispositif d'exploitation est capable d'intrepréter simultanément les états de fonctionnement différents émanant de plusieurs oscillateurs. Cette possibilité permet, notamment pour une application telle qu'une installation de protection périphérique, la surveillane simultanée de plusieurs capteurs et en outre, permet de prendre en compte des signaux "alarme" après qu'un ou plusieurs ouvertures ont déjà été violées.

Le procédé selon la présente invention permet également des variantes qui limite la consommation en énergie électrique du capteur et du dispositif d'exploitation de telle sorte que ces derniers soient autonomes et de préférence alimentés par des batteries ou des piles de faible puissance tout en ayant une autonomie de très longue durée.

Les états de fonctionnement de l'oscillateur peuvent être quelconques. Cependant, de manière à limiter l'énergie consommée, on fait, de préférence, fonctionner l'oscillateur de telle sorte que ses oscillations soient modulées en amplitude par tout ou rien selon un rapport cyclique très faible et, de manière à limiter également la consommation en énergie électrique du dispositif d'exploitation, on le fait fonctionner séquentiellement en veille-arrêt selon un cycle régulier en relation avec les états de fonctionnement de l'oscillateur.

Le procédé selon la présente invention permet également de faire fonctionner, de préférence, le dispositif d'exploitation en veille prolongée, suite à la réception d'un signal radioélectrique sur son récepteur, la durée de cette phase de veille prolongée pouvant être conditionnée par la signification du signal reçu ou par la nécessité d'analyser plus longuement celui-ci.

Selon une autre variante, la phase de veille prolongée du dispositif d'exploitation peut être déclenchée par un ordre extérieur et, selon une application particulière, l'ordre extérieur de mise en veille prolongée correspond à un signal de démarrage de l'installation, de manière à connaître dès le départ l'état de fonctionnement des oscillateurs utilisés dans celle-ci.

Afin d'éviter une mise en veille prolongée trop fréquente du dispositif d'exploitation et, dans le but d'économiser l'énergie consommée par celui-ci, une variante du procédé selon la présente invention consiste à bloquer totalement l'oscillateur lors de la présence du corps à détecter à proximité de l'oscillateur, ou lors de son absence.

En outre, dans une forme d'exécution préférée du procédé selon la présente invention, on introduit dans les états de fonctionnement de l'oscillateur un code particulier de manière à singulariser celui-ci, code qui peut être reconnu par le dispositif d'exploitation. Ainsi, chaque oscillateur d'une installation particulière peut être reconnu par le dispositif d'exploitation et ce dernier pourra, dans le cas où il comprend un récepteur relié à un ou plusieurs capteurs par voie radioélectrique, distinguer les signaux émanant des oscillateurs dont il a la charge de signaux étrangers provenant, par exemple, d'une installation voisine. Pour effectuer ce codage particulier, ou pourra moduler l'amplitude, la fréquence ou la phase des oscillations de l'oscillateur ou utiliser une combinaison de ces modulations.

Le procédé selon la présente invention permet donc de fournir à la sortie du dispositif d'exploitation plusieurs informations distinctes et notamment une information permanente correspondant à la présence du corps à détecter à proximité de l'oscillateur, une information permanente correspondant à son absence et une ou plusieurs informations temporaires ou transitoires correspondant aux mouvements de l'objets à détecter à proximité de l'oscillateur. Ces informations temporaires peuvent notamment être interprétées comme des signaux d'alarme. On peut indiquer que la possibilité de connaître à tout instant l'état du capteur, notamment suite à l'ordre extérieur de mise en veille permanente indiqué plus haut, peut être très intéressante par exemple dans les installations de surveillance périphérique de locaux on lorsque le capteur est utilisé par exemple comme détecteur de position, dans les systèmes automatisés.

La présente invention a également pour objet un système pour la mise en oeuvre du procédé de l'invention et permettant la déection électromagnétique de la position d'un corps par un capteur comprenant un oscillateur électromagnétique et la transmission par voie radioéletrique d'un signal vers un dispositif d'exploitation comprenant un récepteur radioélectrique et fournissant des informations relatives aux mouvements et/ou à la position dudit corps par rapport audit oscillateur.

Selon la présente invention, le capteur comprend un modulateur relié à l'oscillateur de manière à moduler les oscillations de ce dernier. Un détecteur est en outre relié d'une part à l'oscillateur pour détecter les variations d'amplitude des oscillations lorsque le corps se déplace à partir d'une position déterminée initiale par rapport à l'oscillateur et d'autre part au modulateur pour lui imposer un premier état de fonctionnement lorsque le corps est à ladite position déterminée et un second état de fonctionnement lorsque le corps s'est éloigné de ladite position déterminée. Le dispositif dont le récepteur est sensible aux signaux radioélectriques émis par ledit oscillateur, comprend des moyens pour interpréter ces signaux pour en déduire des informations sur le déplacement et/ou la position dudit corps par rapport à sa position initiale qui correspondent aux premier et second états de fonctionnement dudit oscillateur.

Selon une forme d'exécution préférée de la présente invention, le modulateur du capteur comprend des moyens permettant de modifier temporairement le premier état de fonctionnement de l'oscillateur suite à un changement de position dudit corps.

Le modulateur peut en outre comprendre des moyens pour placer l'oscillateur dans un troisième état de fonctionnement qui correspond à la nouvelle position dudit corps.

Selon une variante de la présente invention, le modulateur peut comprendre des moyens pour conditionner le passage de l'oscillateur, de son premier état de fonctionnement à son deuxième, à la durée de son premier état de fonctionnement.

Dans une variante, ledit oscillateur du capteur peut être du type à réaction par couplage électromagnétique et stabilisé par quartz, la présence du corps à détecter à proximité de cet oscillateur le bloquant en venant perturber le couplage magnétique par exemple entre un circuit oscillant accordé et un enroulement de réaction entretenant l'oscillation. De cette manière, la sensibilité de détection du capteur est relativement indépendante des paramètres électriques de l'élément actif constituant l'oscillateur, cette sensibilité étant essentiellement fonction de la géométrie du circuit oscillant et de l'enroulement de réaction. Dans ce but, ledit oscillateur du type à réaction par couplage électromagnétique peut comprendre deux solénoïdes plats coaxiaux.

Le modulateur du capteur peut en outre comprendre des moyens générant vers l'oscillateur des signaux tels que la modulation des oscillations de l'oscillateur est du type pulsée en tout ou rien.

Selon la présente invention, le dispositif d'exploitation peut comprendre, outre le récepteur, un décodeur capable d'analyser les signaux venant du récepteur et de générér à sa sortie des informations relatives à la position ou au changement de position dudit corps et un séquencer capable d'imposer des cycles de veille-arrêt au récepteur et/ou le décodeur.

Ledit récepteur du dispositif d'exploitation peut être du type superhétérodyne et comprendre un étage oscillateur local, un étage mélangeur capable de mélanger les oscillations de l'oscillateur local et les signaux reçus par un étage haute fréquence, un ou plusieurs étages d'amplification à fréquence intermédiaire, ces étages étant montés électriquement en série entre les pôles de l'alimentation en énergie électrique et étant parcourus par un même courant moyen, un détecteur pouvante être associé au dernier étage d'amplification à fréquence intermédiaire.

Le capteur et le dispositif d'exploitation du système de détection comprennent chacun, de préférence, une source d'énergie électrique formée par une pile ou une batterie de sorte que le capteur et le dispositif d'exploitation soient autonomes et donc indépendants de toute source d'énergie électrique extérieure telle que le réseau.

La présente invention admet également un système de détection particulier pouvant être notamment appliqué aux installations de protection périphérique des locaux dans lesquels une alarme doit être déclenchée par exemple lorsqu'une porte ou une fenêtre s'ouvre. Dans ce cas, le corps à détecter est un objet métallique fixé de préférence sur la partie mobile du moyen de fermeture de l'ouverture à surveiller tandis que le capteur est fixé de préférence sur la partie dormante, de façon telle que le corps métallique se trouve à proximité immédiate du capteur lorsque le moyen de fermeture est effectivement fermé et se trouve éloigné du capteur lorsque ce moyen est ouvert.

Selon ce système de détection particulier, le capteur comprend un oscillateur du type à réaction par couplage électromagnétique stabilisé par quartz et formé par deux solénoïdes plats coaxiaux, un modulateur du type multivibrateur à deux transistors se bloquant et se débloquant en même temps et dont la période et le rapport cyclique des impulsions de sortie en tout ou rien sont déterminés par les temps de charge et de décharge d'un condensateur, un circuit de temporisation à condensateur capable de modifier ladite période en agissant sur le temps de charge et/ou le temps de décharge du condensateur dudit modulateur, un détecteur à diode détectant l'amplitude des oscillations de l'oscillateur et agissant sur le circuit de temporisation et une source en énergie électrique autonome telle qu'un élément unique de pile ou de batterie.

Ce capteur ainsi formé est tel que lorsque ledit corps est à proximité immédiate de l'oscillateur, ce dernier est bloqué ou n'oscille pas, lorsque ledit corps quitte la proximité immédiate de l'oscillateur, la modulation des oscillations de l'oscillateur imposée par le modulateur correspond au rythme propre du modulateur pendant un temps limité par le circuit de temporisation, ce rythme associé au déblocage de l'oscillateur correspondant à l'émission du signal temporaire d'alarme. Lorsque ledit corps est absent de la proximité immédiate de l'oscillateur du capteur, le rythme des oscillations de l'oscillateur correspond au rythme du modulateur modifié par le circuit de temporisation. On peut noter que, après que le temps déterminé par le circuit de temporisation se soit écoulé, ledit circuit de temporisation modifie le rythme proper du modulateur pour lui imposer un rythme permanent particulier correspondant au signal "absence du corps à détecter". Ainsi, le modulateur génère des impulsions de largeur constante selon seulement deux périodes différentes, l'une correspondant au rythme propre du modulateur qui invervient d'une part lorsque le corps est présent et l'oscillateur bloqué et d'autre part lors de l'émission temporatire du signal d'alarme lorsque le corps vient de s'éloigner et débloque l'oscillateur, et l'autre correspondant au rythme modifié du modulateur qui intervient de manière permanente en l'absence du corps à détecter.

Un dispositif d'exploitation particulier peut être avantageusement associé au capteur particulier décrit ci-dessus. Ce dispositif d'exploitation comprend une source d'énergie électrique autonome telle qu'une pile ou une batterie, un récepteur de signaux radioélectriques ou électromagnétiques générant les signaux correspondant à la modulation de l'onde haute fréquence, un décodeur des signaux reçus capable de fournir à sa sortie des informations relatives à la position ou au changement de position dudit corps et un séquenceur.

Dans cet exemple, le récepteur est du type superhétérodyne et comprend un étage oscillateur local, un étage mélangeur connecté à l'étage oscillateur local et à une étage haute fréquence, un ou plusieurs étages amplificateurs à fréquence intermédiaire et un détecteur ou un étage de détection, ces différents étages étant du type à transistors et étant montés électriquement en série entre les pôles de la source d'alimentation électrique de telle sorte que le courant moyen de polarisation des étages est le même pour chaque étage et le courant collecteur moyen traversant les étages est le même pour chaque étage. Le récepteur est de préférence tel que le signal fournit par ce dernier au décodeur correspond à la modulation du signal reçu par le récepteur et le séquenceur est de préférence tel qu'il établit et coupe successivement l'alimentation en énergie électrique du récepteur et du décodeur selon un rythme veille-arrêt compatible avec le rythme des oscillations de l'oscillateur du capteur.

Dans cette variante, le décodeur peut être capable d'imposer une veille prolongée au séquenceur lorsqu'il reçoit un signal issu du récepteur. En outre, le séquenceur peut comprendre une entrée pour un ordre extérieur lui commandant une veille prolongée.

Le procédé et le système de détection selon la présente invention seront mieux compris à l'étude des exemples non limitatifs représentés sur le dessin annexé sur lequel:

— La figure 1 représente schématiquement un système de détection simplifiée;
— La figure 2 représente le système de détection selon la figure 1 complété;
— Et les figures 3, 4 et 5 représentent un système de détection particulier conforme à l'invention et décrit à titre d'exemple non limitatif, la figure 3 représentant un capteur, la figure 4 représentant un dispositif d'exploitation et la figure 5 représentant une partie du dispositif d'exploitation de la figure 4.

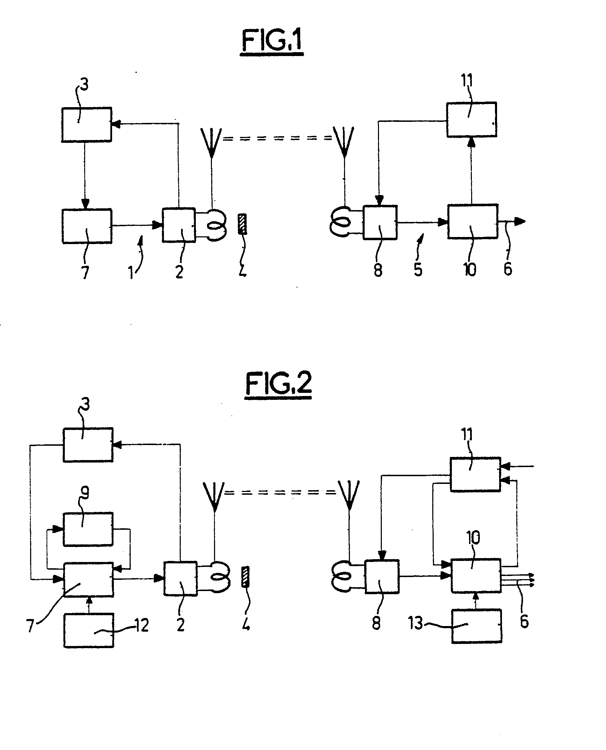

Le système de détection représenté sur la figure 1 comprend un capteur repéré d'une manière générale par la référence 1 et comprenant un oscillateur 2 capable de générer dans son voisinage un champ électromagnétique et un détecteur 3 capable de détecter l'amplitude des oscillations de l'oscillateur déterminée par la position du corps 4 par rapport à l'oscillateur ainsi qu'un dispositif d'exploitation, repéré d'une manière générale par la référence 5, fournissant à sa sortie 6 des signaux relatifs à la position et/ou aux variations de position du corps 4 par rapport à l'oscillateur 2.

Le capteur 1 comprend en outre un modulateur 7 générant la modulation des oscillations de l'oscillateur et capable de modifier cette modulation en fonction de signaux provenant du détecteur 3 ou sur un ordre de celui-ci.

Le dispositif d'exploitation 5 comprend un récepteur 8 sensible aux signaux radioélectriques ou électromagnétiques, arbitrairement représentés sur les figures 1 et 2 par un double trait interrompu, émis par l'oscillateur 2 du capteur 1. Ce dispositif 5 comprend en outre un décodeur 10 capable d'analyser des signaux venant du récepteur 8 et de générer sur sa sortie 6 des informations relatives à la position ou au changement de position du corps 4 et un séquenceur 11 capable d'imposer des cycles veille-arrêt au récepteur 8.

Dans le mode de réalisation illustré sur la figure 2, le capteur 1 comprend également des moyens 9 capables de retarder et/ou de conditionner la génération de modulations temporaires au type et/ou à la durée de la modulation permanente les précédant.

Le capteur 1 comprend également des moyens de codage 12 des oscillations de l'oscillateur 2 et le dispositif d'exploitation 5 comprend des moyens 13 capables d'interpréter ce codage.

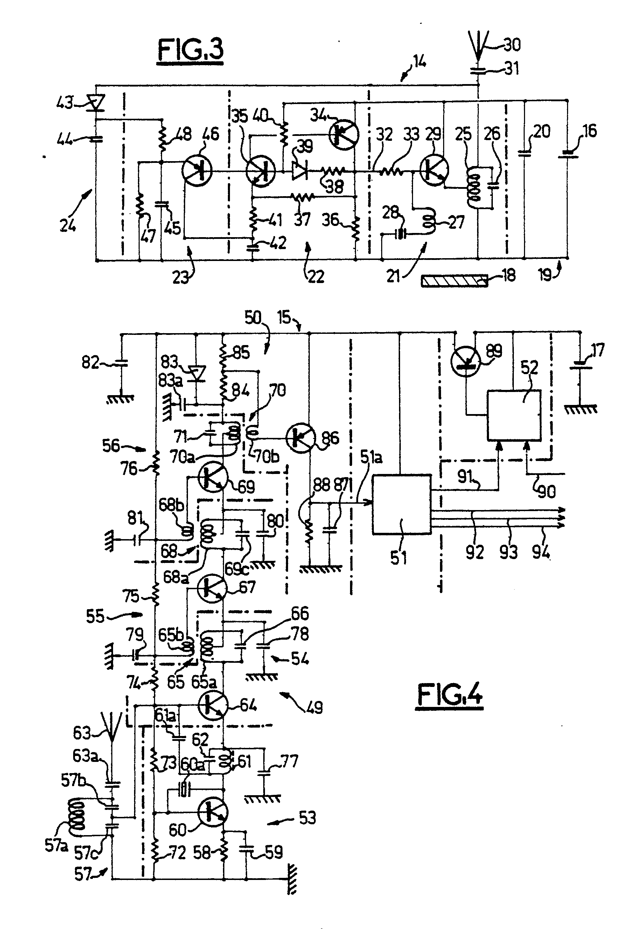

En référence aux figures 3, 4 et 5, on va maintenant décrire système de détection particulier.

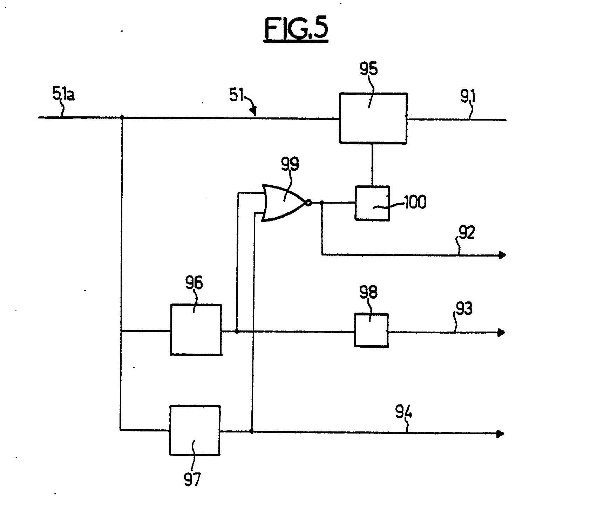

Ce système de détection particulier comprend un capteur repéré d'une manière générale par la référence 14 et représenté sur la figure 3 et un dispositif d'exploitation repéré d'une manière générale par la référence 15 et représenté sur les figures 4 et 5. Le capteur 14 et le dispositif d'exploitation 15 sont complètement séparés, le dispositif d'exploitation 15 étant à distance du capteur 14 et étant relié à ce dernier uniquement par voie électromagnétique ou radioélectrique.

Le capteur 14 et le dispositif d'exploitation 15 ont été spécialement étudiés pour être respectivement autonomes et d'une autonomie de longue durée de manière à pouvoir être alimentés respectivement par des piles 16 et 17. Leur structure et leur mode de fonctionnement permet donc une faible consommation en énergie électrique.

Le système de détection représenté sur les figures 3, 4 et 5 convient particulièrement à une installation de protection périphérique surveillant des ouvertures telles que portes ou fenêtres le dispositif d'exploitation 15 pouvant gérer les informations reçues de plusieurs capteurs identiques ou semblables au capteur 14. Dans ce cas relatif à un moyen de fermeture, il est interessant de savoir si ce moyen est fermé, s'il est ouvert ou s'il vient de s'ouvrir.

Dans un montage particulier, le capteur 14 est lié à l'encadrement du moyen de fermeture et sur le battant de ce moyen de fermeture un corps métallique 18 est fixé et peut venir très près du capteur 14 lorsque ce moyen de fermeture est fermé et s'en éloigner considérablement lorsque ce dernier est ouvert. Un montage inverse est également possible. Le dispositif d'exploitation 15 peut être installé à un endroit éloigné du capteur 14 et être relié à un dispositif d'alarme.

Le capteur 14 comprend une source d'énergie 19 formée par l'élément de pile 16 qui est découplé par un condensateur 20, un oscillateur repéré d'une manière générale par la référence 21 capable de générer un champ électromagnétique, un modulateur repéré d'une manière générale par la référence 22 générant la modulation des oscillations de l'oscillateur 21, un dispositif de temporisation repéré d'une manière générale par la référence 23 et un détecteur repéré d'une manière générale par la référence 24. La source d'énergie électrique 19, l'oscillateur 21, le modulateur 22, le dispositif de temporisation 23 et le détecteur 24 sont grosso modo délimités, sur la figure 3, par des traits mixtes épais.

L'oscillateur accordé 21 est du type à réaction par couplage magnétique et comprend une self 25 aux bornes de laquelle est monté en parallèle un condesateur d'accord 26, un solénoïde ou enroulement de réaction 27 en série avec un quartz 28 de stabilisation de la fréquence, ce solénoïde et ce quartz étant montés entre le pôle— de la batterie 16 et la base d'un transistor 29 dont l'émetteur est relié à une prise intermédiaire sur la self 25 et le collecteur au pôle+de la batterie 16. Une des bornes d'extrémité de la self 25 est reliée au pôle— de la batterie 16 alors que son autre borne d'extrémité est reliée à une antenne 30 par un condensateur 31. La self 25 et l'enroulement de réaction 27 peuvent avantageusement être formés par deux solénoïdes plats coaxiaux imprimés sur le circuit supportant les composants du capteur.

La modulation de l'oscillateur 21 s'effectue en appliquant les impulsions issues du modulateur 22 sur la base du transistor 29 par l'entrée 32 de l'oscillateur via la résistance 33.

Dans l'exemple de réalisation proposé, l'oscillateur ci-dessus décrit est particulièrement interessant. En effet, lorsque le corps métallique 18 se trouve à proximité de la self 25 et de l'enroulement de réaction 27, le couplage électromagnétique entre la self 25 et l'enroulement de réaction 27 est pertubé si bien que l'oscillateur 21 n'oscille plus et n'émet donc pas d'ondes radioélectriques ou électromagnétiques.

Le modulateur 22 est du type multivibrateur et est conçu pour moduler les oscillations de l'oscillateur 21 en tout ou rien selon un rapport cyclique faible. Le modulateur 22 comprend un transistor 34 et un transistor 35 se bloquant et se débloquant en même temps. Le collecteur du transistor 34 qui est relié à l'entrée 32 de l'oscillateur 21 est également relié au pôle— de la batterie 16 par l'intermédiare d'une résistance 36, à l'émetteur du transistor 35 par une résistance 37 et à la base du transistor 35 par l'intermédiaire d'une résistance 38 et d'une diode 39 qui sert à stabiliser la période du modulateur vis-à-vis des fluctuations de l'alimentation et des conditions de température ambiante. L'émetteur du transistor 34 est relié au pôle + de la batterie 16 et est également relié à la base du transistor 35 par l'intermédiaire d'une résistance 40. En outre, l'émetteur du transistor 35 est relié au pôle— de l'alimentation par l'intermédiaire d'une résistance 41 et d'un condensateur 42 et le collecteur du transistor 35 est relié directement à la base du transistor 34.

Le modulateur 22 permet de générer sur la ligne d'entrée 32 de l'oscillateur 21 des oscillations du type pulsé en tout ou rien grâce au condensateur 42. En effet, par un bon choix des composants, le temps de charge du condensateur 42 à travers la résistance 41 détermine le temps durant lequel l'oscillateur 21 fonctionne, s'il n'est pas bloqué par le corps 18, et le temps de décharge de ce condensateur 42 à travers les résistances 41 et 37 détermine le temps de repos de l'oscillateur 21. Ce rythme pulsé est le rythme propre du modulateur 22.

Le détecteur 24 comprend une diode 43 et un condensateur 44 montés en série entre la borne d'extrémité de la self 25 reliée à l'antenne 30 et le pôle— de l'alimentation 16. La diode 43 et le condensateur 44 permettent de détecter la tension haute fréquence générée par l'oscillateur 21.

Le dispositif de temporisation 23 permet de modifier le rythme propre du modulateur 22. Le dispositif de temporisation 23 comprend un condensateur 45 qui permet d'augmenter le temps de décharge du condensateur 42 correspondant à l'arrêt de l'oscillateur 21. Pour obtenir ce résultat, le dispositif de temporisation 23 comprend un transistor 46 dont la base est reliée à la base du transistor 35 du modulateur 22, dont le collecteur est reliée au modulateur 22 entre la résistance 41 et le condensateur 42 et dont l'émetteur est reliée au pôle— de l'alimentation 16 par l'intermédiaire d'une résistance 47 montée en parallèle avec le condensateur 45 et est également reliée au point commun entre la diode 43 et le condensateur 44 du détecteur 24 par l'intermédiaire d'une résistance 48.

Le capteur 14 qui vient d'être décrit fonctionne de la manière suivante. Lorsque le corps 18 est à proximité de l'oscillateur 21, cet oscillateur est bloqué. En conséquence, aucun signal radioélectrique ou électromagnétique n'est émis par ce dernier. Lorsque le corps 18 s'éloigne de la proximité immédiate de l'oscillateur 21, le modulateur 22 impose à l'oscillateur 21 son rythme propre. En même temps, le condensateur 45 est lentement chargé par la tension haute fréquence pulsée redressée. Quand la tension sur le condensateur 45 est suffisante, une partie de la charge accumulée par celui-ci pendant chaque pulsation du modulateur 22 est transférée au condensateur 42 pendant l'arrêt de l'oscillateur 21 par le transistor 46 devenu conducteur. Un nouveau rythme de pulsations du modulateur 22 s'établit alors. Ce nouveau rythme correspond au fait que le corps 18 est absent.

Le capteur 14 permet donc de moduler les oscillations de l'oscillateur 21 selon deux rythmes de manière à émettre deux signaux radioélectriques modulés différemment, un premier rythme correspondant au fait que le corps 18 vient de s'éloigner de l'oscillateur 21 et correspondant à un signal d'alarme et un second rythme correspondant au fait que l'objet 18 est absent de la proximité immédiate de l'oscillateur 21 depuis une temps supérieur au temps prédéterminée par le circuit de temporisation 23.

En outre, ce capteur est conçu pour ne pas émettre un signal correspondant à l'alarme lorsque le corps 18 s'éloigne et revient à proximité immédiate de l'oscillateur 21 suite à un battement du moyen de fermeture portant le corps 18. En effet, lorsque le corps 18 revient bloquer l'oscillateur 21, la capacité 45, qui n'est plus rechargée, se décharge lentement à travers la résistance 47. Pour que le capteur puisse réémettre un signal d'alarme qui soit de durée suffisante pour être pris en compte par le dispositif d'exploitation associé, il faut que la capacité 45 ait pu se décharger suffisamment. Celà détermine un temps minimum après le retour du corps 18 en deça duquel il est impossible de transmettre un signal correspondant à une alarme valable.

En référence aux figures 4 et 5, on va maintenant décrire le dispositif d'exploitation 15 dont les différentes parties et sous-parties sont séparées grosso modo par des traits mixtes forts.

Le dispositif d'exploitation 15 comprend une partie réception-détection formée par un récepteur repéré d'une manière générale par la référence 49 et un détecteur repéré d'une manière générale par la référence 50, un décodeur 51, un séquenceur 52 et la source d'alimentation en énergie électrique 17.

Le récepteur 49 est conçu, en association avec le détecteur 50, de manière à consommer peu d'énergie électrique.

Le récepteur 49 est du type superhétérodyne et comprend successivement un étage oscillateur local 53, un étage mélangeur 54, deux étages d'amplification à fréquence intermédiaire 55 et 56 ainsi qu'un étage haute fréquence 57 connecté à l'étage mélangeur 54. Ces différents étages sont en soi très bien connus. Cependant, le montage de ces étages, dans l'exemple représenté, est particulier dans le but de rendre le récepteur peu consommateur en énergie électrique. En effet, les différents étages composant le récepteur 49 sont montés électriquement en série entre les pôles de l'alimentation de telle sorte que le courant moyen de polarisation des étages est le même pour chaque étage et le courant collecteur moyen traversant les étages est le même pour chaque étage.

Dans ce but, on a monté en série, entre le pôle − et le pôle + de l'alimentation 17, une résistance 58 avec en parallèle un condensateur 59, un transistor 60 et un solénoïde 61 avec en parallèle un condensateur 62 pour l'étage oscillateur local 53, un transistor 64 et le primaire 65a d'un transformateur 65 avec en parallèle un condensateur 66 pour l'étage mélangeur 54, un transistor 67 et le primaire 68a d'un transformateur 68 avec en parallèle un condensateur 69c pour l'étage d'amplification à fréquence intermédiaire 55 et, un transistor 69 et le primaire 70a d'un transformateur 70 avec en parallèle un condensateur 71 pour l'étage d'amplification à fréquence intermédiaire 56. Entre les bornes de l'alimentation en énergie électrique sont également montées en série des résistances de polarisation 72, 73, 74, 75, 76, la base du transistor 60 étant reliée à la jonction entre les résistances 72 et 73, la base du transistor 64 étant reliée à la jonction entre les résistances 73 et 74, la base du transistor 67 étant reliée à la jonction entre les résistances 74 et 75 en traversant le secondaire 65b du transformateur et la base du transistor 69 étant reliée à la jonction entre les résistances 75 et 76 à travers le secondaire 68b du transformateur 68. Les différents étages sont découplés par les condensateurs 77, 78, 79, 80, 81 et 82. En outre, un quartz 60a est monté entre la base et le collecteur du transistor 60 et un condensateur 61a est monté entre le collecteur du transistor 60 et la base du transistor 64.

L'étage haut fréquence 57 comprend un enroulement 57a dont les extrémités sont connectées respectivement à la base du transistor 64 de l'étage mélangeur 49 par l'intermédiaire des capacités 57b et 57c, l'une des extrémités de l'enroulement 57a étant par ailleurs reliée au pôle − de l'alimentation 17 et son autre extrémité étant reliée à une antenne 63 par l'intermédiaire d'un condensateur 63a.

Le détecteur 50 comprend une diode de polarisation 83 et, monté en parallèle avec cette diode 83, un pont diviseur formé par les résistances en série 84 et 85. La diode 83 et les résistances 84 et 85 sont également montées en série avec les étages 53, 54, 55 et 56 du côté de l'étage amplificateur 56, la jonction entre cet étage 56 et la diode 83 étant découplée par la capacité 83a.

La jonction entre les résistances 84 et 85 est reliée à la base d'un transistor de détection 86 au travers du secondaire 70b du transformateur 70. L'émetteur du transistor 86 est relié au pôle + de l'alimentation et son collecteur est relié à l'entrée 51a du décodeur 51, ce collecteur par ailleurs relié au pôle– de l'alimentation par l'intermédiaire d'un condensateur 87 et d'une résistance 88 montés en parallèle. Le transistor 86 servant à la détection d'amplitude est polarisé à la limite de conduction par la diode 83 et par les résistances 84 et 85. Il n'est donc par conducteur en l'absence de signaux haute fréquence.

Le décodeur 51 et le séquenceur 52 ne présentent pas de caractéristiques électriques particulières. Cependant, dans le but de limiter la consommation en énergie électrique du dispositif d'exploitation 15, le séquenceur 52 a une structure connue telle qu'il rythme selon un cycle veille-arrêt le fonctionnement du récepteur 49, du détecteur 50 et du décodeur 51 en interrompant et en rétablissant séquentiellement leur alimentation grâce à la commutation du transistor 89 monté en série avec la ligne positive, le séquenceur étant lui perpétuellement alimenté.

En outre, le séquenceur 52 présente une entrée 9 qui permet la mise en veille prolongée du récepteur-détecteur suivant un ordre extérieur et le décodeur 51 est relié au séquenceur 52 par la ligne 91 pour notamment imposer au séquenceur 52 une veille prolongée lors de la réception d'un signal radioélectrique et pour que le décodeur 51 ait le temps d'analyser ce signal reçu sur son entrée 51a. Pour réaliser cette veille prolongée, le séquenceur 52 maintient passant le transistor 89 qui alimente alors de récepteur 49, le détecteur 50 et le décodeur 41 en permanence pendant la veille prolongée.

En référence à la figure 5, on va décrire un décodeur 51 particulièrement bien adapté à l'exemple décrit.

La ligne d'entrée 51a du décodeur 51, reliée au collecteur du transistor 86, est reliée à l'entrée d'un monostable 95, d'un décodeur 96 de la modulation du type "alarme et d'un décodeur 97 de la modulation du type "absence", ces modulations correspondant respectivement à la modulation propre et à la modulation modifiée du modulateur 22 du capteur 14.

La sortie du monostable 95 est reliée par la ligne 91 au séquenceur 52 et ce monostable est capable d'imposer une veille prolongée au séquenceur 52 d'une durée limitée mais il peut être désarmé à tout instant comme on va le voir plus loin.

La sortie du décodeur 97 est reliée à la sortie 94 du décodeur 51. Le décodeur 96 est relié à la sortie 93 du décodeur 51 par l'intermédiaire d'un circuit de temporisation 98.

Les décodeurs 96 et 97 sont chargés de reconnaître la modulation temporelle par tout-ou-rien des signaux reçus par le récepteur 49, c'est-à-dire que si et seulement si cette modulation temporelle présente une période et un rapport cyclique correspondant au signal temporaire "alarme", le décodeur 96 affichera un signal logique "1" à sa sortie tant que la modulation temporaire "alarme" sera présente à sont entrée. Si la modulation temporaire par tout-ou-rien présente à l'entrée 51a du décodeur 51 correspond à l'information "objet absent", ce sera alors de décodeur 97 qui affichera un signal logique "1" à sa sortie 94 tant que la modulation permanente correspondant à l'absence de l'objet à détecter sera présente sur son entrée 51a. Si la modulation présente à l'entrée 51a du décodeur ne correspond ni au signal "alarme" ni au signal "objet absent", les sorties respectives des décodeurs de modulations 96 et 97 afficheront un "0" logique correspondant à une absence de tension électrique.

Les décodeurs 96 et 97 sont chacun reliés à une entrée d'une porte NOR 99 dont la sortie est reliée à la sortie 92 du décodeur 51 et à l'entrée d'un circuit de temporisation 100. La sortie de ce circuit de temporisation 100 est reliée au monostable 95 de manière à désarmer ce dernier comme on le verra.

Dans l'exemple représenté, la sortie 93 du décodeur 51 fournit une information du type "alarme", sa sortie 94 fournit une information du type "absence de l'objet" et sa sortie 92 fournit une information du type "présence de l'objet".

On va maintenant décrire comment fonctionne le dispositif d'exploitation 15 représenté sur les figures 4 et 5 en relation avec le capteur 14 représenté sur la figure 3.

Le récepteur 49, le détecteur 50 et le décodeur 51 fonctionnent selon un rythme de surveillance du type veille-arrêt imposé par le séquenceur 52 qui les alimente séquentiellement.

Si l'étage haut fréquence 57 ne reçoit aucun signal, le transistor 86 reste bloqué et aucun signal n'apparaît à l'entrée 51a du décodeur 51. Le décodeur 51 fournit alors sur sa sortie 92 une information indiquant que l'oscillateur 21 est bloqué et, qu'en conséquence, le corps 18 est à proximité de l'oscillateur 21 du capteur 14 et que le moyen de fermeture est fermé.

Si une onde électromagnétique ou radioélectrique est captée par l'étage haute fréquence 57, le détecteur 50 détecte cette onde et une tension apparaît à l'entrée 41a du décodeur 51 par l'intermédiaire du transistor 86. Grâce à son monostable 95 qui s'arme, le décodeur 51 impose une veille prolongée au séquenceur 52 par la ligne 91 d'une durée suffisante lui permettant d'intrepréter le signal reçu.

Si le signal reçu provient du capteur 14, le décodeur 51 fournit à l'une de ses sorties 93 ou 94 un signal correspondant à l'éloignement récent du corps 18 ou à l'absence de celui-ci.

Si le signal reçu par le dispositif d'exploitation est un signal correspondant au rythme propre du modulateur 22 du capteur 14, il est décodé par le décodeur 96. Et si ce signal a une durée minimum égale à la temporisation imposée par le circuit de temporisation 98, le décodeur 51 fournit sur sa sortie 93 une information permettant de déclencher une alarme associée à cette sortie. Si le signal reçu correspond au rythme modifié du modulateur 22 du capteur 14, correspondant au fait que l'objet 18 est absent, il est décodé par le décodeur 97 et le décodeur 51 fournit à sa sortie 94 une information correspondant au fait que le moyen de fermeture est ouvert.

Par contre, si le signal reçu n'a pas pour origine le capteur 14, le circuit de temporisation 100, au bout d'un temps déterminé, désarme le monostable 95 et le séquenceur 52 reprend sont cycle de veille-arrêt.

Un système de protection comprenant le détecteur 14 selon la figure 3 et le dispositif d'exploitation 15 selon les figures 4 et 5 a été réalisé. Selon cette réalisation, l'oscillateur 21 du capteur 14 émet durant 3 secondes une onde électromagnétique ou radioélectrique représentant une durée de 3 milli-secondes et une période de 100 milli-secondes lorsque le corps 18 vient de quitter la proximité de l'oscillateur 21, c'est-à-dire lorsque le moyen d'ouverture associé au corps 18 vient de s'ouvrir. L'oscillateur 21 émet ensuite une onde 5 secondes correspondant au fait que le corps 18 est absent depuis un certain temps de la proximité immédiate de l'oscillateur 21 et donc que le moyen de fermeture est ouvert. Cette onde fait suite à la première et permet la transmission d'un signal "alarme" ne provenance d'un autre capteur entre deux impulsions.

Le dispositif d'exploitation 15 réalisé est tel que le séquenceur 52 impose un rythme de veille de 120 milli-secondes toutes les 500 milli-secondes. La veille prolongée imposée par le monostable 95 du décodeur 51 au séquenceur 52, suite à la réception d'un signal, a une durée de 3 secondes. Si le signal reçu par le dispositif d'exploitation 15 ne provient pas du capteur 14, le circuit de temporisation 100 du détecteur 51 désarme le monostable 95 au bout de 150 milli-secondes. La durée minimum de la présence du signal d'alarme à l'entrée du détecteur 51 pour que ce signal soit validé est de 500 milli-secondes, cette durée étant déterminée par le circuit de temporisation 98 du détecteur 51.

La présente invention ne se limite pas à l'exemple ci-dessus décrit en référence aux figures annexées. Le système et le procédé selon la présente invention peuvent être mis en application de différentes façons, en particulier en mettant en oeuvre des procédés de codage et de modulation sophistiqués. Le dispositif, objet de la présente invention, peut être également amélioré en intégrant l'électronique selon les technologies couches épaisses et sourtout couches minces de manière à réduire les coûts et les volumes occupés notamment lorsqu'il s'agit d'applications visant les systèmes de protection périphérique. En outre, les fonctions de décodage et de séquencement mises en oeuvre dans le dispositif d'exploitation peuvent avantageusement utiliser les vastes possibilités des microprocesseurs. La présente invention rend donc possible la réalisation de systèmes de détection entièrement autonomes et de coût réduit applicables notamment à la centralisation d'informations relatives à des éléments ou des corps mobiles situés dans des locaux de manière à gérer la protection et les automatismes mis en oeuvre dans ceux-ci.

## Revendications

1. Procédé de détection électromagnétique de la position d'un corps (18) par rapport à un oscillateur électromagnétique (21) et de transmission par voie radio-électrique à un dispositif d'exploitation (15) d'un signal relatif aux mouvements ou à la position dudit corps (18), caractérisé par le fait qu'il consiste:

à déceler la variation d'amplitude des oscillations dudit oscillateur (21) provoquée par un déplacement du corps (18) s'éloignant d'une position déterminée initiale pour laquelle l'oscillateur (21) se trouvait dans un premier état de fonctionnement;

à modifier ce premier état de fonctionnement en réponse à la variation d'amplitude décelée de façon à placer l'oscillateur (21) dans un deuxième état de fonctionnement;

et à recevoir sur le dispositif d'exploitation (15) les signaux radioélectriques émis par ledit oscillateur (21) pour en déduire des informations sur le déplacement et/ou la position du corps (18) par rapport à sa position initiale, qui correspondent aux premier et deuxième états de fonctionnement de l'oscillateur (21).

2. Procédé selon la revendication 1, caractérisé par le fait que le second état de fonctionnement de l'oscillateur (21) est temporaire.

3. Procédé selon la revendication 2, caractérisé par le fait que, suite au second état de fonctionnement, on place l'oscillateur (21) dans un troisième état de fonctionnement qui correspond à la nouvelle position du corps (18).

4. Procédé selon l'une quelconque des revendications précédentes, caractérisé par le fait que le passage du premier état de fonctionnement de l'oscillateur (21) à son deuxième état de fonctionnement est conditionné par la durée de sont premier état de fonctionnement.

5. Procédé selon l'une des revendications 2, 3 et 4, caractérisé par le fait que le dispositif d'exploitation (15) est capable d'interpréter simultanément les états de fonctionnement différents émanants de plusieurs oscillateurs.

6. Procédé selon l'une quelconque des revendications précédentes, caractérisé par le fait que l'oscillateur (21) est bloqué lors de la présence ou de l'absence du corps (18) à proximité de l'oscillateur (21).

7. Procédé selon l'une quelconque des revendications précédentes, caractérisé par le fait qu'on fait fonctionner l'oscillateur (21) de telle sorte que ses oscillations soient du type pulsé en tout ou rien et qu'on fait fonctionner également le dispositif d'exploitation séquentiellement en veille-arrêt selon un cycle.

8. Procédé selon la revendication 7, caractérisé par le fait qu'on fait fonctionner le dispositif d'exploitation en veille prolongée suite à la réception d'un signal radioélectrique sur son récepteur, la durée de cette phase de veille prolongée pouvant être conditionnée par la signification du signal reçu.

9. Procédé selon la revendication 7, caractérisé par le fait qu'on fait fonctionner le dispositif d'exploitation en veille prolongée commandée par un ordre extérieur.

10. Système pour la détection électromagnétique de la position d'un corps (18) par un capteur (14) comprenant un oscillateur électromagnétique (21) et un détecteur d'amplitude (24) et la transmission par voie radioélectrique d'un signal vers un dispositif d'exploitation (15) comprenant un récepteur radioélectrique (49) et fournissant des informations relatives aux movements et/ou à la position dudit corps (18) par rapport audit oscillateur (21), en vue de la mise en oeuvre du procédé selon l'une quelconque des revendications précédentes,

caractérisé par le fait que:

ledit capteur (14) comprend un modulateur (22) relié à l'oscillateur (21) de manière à moduler les oscillations de ce dernier, le détecteur d'amplitude (21) étant relié d'une part à l'oscillateur (21) pour détecter les variations d'amplitude des oscillations lorsque le corps (18) se déplace à partir d'une position déterminée initiale par rapport à l'oscillateur (21) et d'autre part au modulateur (22) pour lui imposer un premier état de fonctionnement lorsque le corps (18) est à ladite position déterminée et un second état de fonctionnement lorsque le corps (18) s'es éloigné de ladite position déterminée;

le dispositif d'exploitation (15), dont le récepteur radioélectrique (49) est sensible aux signaux radioélectriques émis par ledit oscillateur, (21) comprenant des myens (51) pour intrepréter ces signaux afin d'en déduire des informations sur le déplacement et/ou la position dudit corps (18) par rapport à sa position initiale qui correspondant aux premier et second états de fonctionnement dudit oscillateur (21).

11. Système selon la revendication 10, caractérisé par le faite que le modulateur (22) comprend des moyens permettant de modifier temporairement le premier état de fonctionnement de l'oscillateur (21) suite à un changement de position dudit corps (18).

12. Système selon la revendication 11, caractérisé par le fait que le modulateur (22) comprend des moyens pour placer l'oscillateur dans un troisième état de fonctionnement qui correspond à la nouvelle position du corps.

13. Système selon l'une quelconque des revendications 10 à 12, caractérisé par le fait que le modulateur (22) comprend des moyens pour conditionner le passage de l'oscillateur (21) de son premier état de fonctionnement à son deuxième état de fonctionnement, à la durée de sont premier état de fonctionnement.

14. Système selon l'une des revendications 10 à 13, caractérisé par le fait que ledit oscillateur (21) est du type à réaction par couplage magnétique et stabilisé par quartz, la présence dudit corps (18) à proximité de cet oscillateur le bloquant.

15. Système selon la revendication 14, caractérisé par le fait que ledit oscillateur du type à réaction par couplage magnétique comprend deux solénoïdes plats coaxiaux (25, 27).

16. Système selon l'une quelconque des revendications 10 15, caractérisé par le fait que le modulateur (22) comprend des moyens générant vers l'oscillateur (21) des signaux tels que la modulation des oscillations de l'oscillateur (21) est du type pulsé en tout ou rien.

17. Système selon l'une quelconque des revendications 10 à 16, caractérisé par le fait que le dispositif d'exploitation (15) comprend un décodeur (51) capable d'analyser les signaux venant du récepteur (49) et de générer à sa sortie des informations relatives à la position et/ou aux changements de position dudit corps (18) par rapport audit oscillateur (21) et en séquencer (52) capable d'imposer des cycles de veille-arrêt au récepteur.

18. Système selon l'une quelconque des revendications 10 à 17, caractérisé par le fait que le récepteur (49) comprend un étage oscillateur local (53), un étage mélangeur (54) capable de mélanger les oscillations de l'oscillateur local (53) et les signaux reçus par un étage fréquence (57) un ou plusieurs étages d'amplification à fréquence intermédiaire (55, 56) et un détecteur ou un étage de détection (86), ces étages étant montés électriquement en série entre les pôles de l'alimentation en énergie électrique et étant parcourus par un même courant moyen.

19. Système selon la revendication 10, caractérisé par le fait que le capteur (14) comprend un oscilateur (21) du type à réaction par couplage magnétique stabilisé par quartz et formé par deux solénoîdes plats coaxiaux (25, 27), un modulateur (22) du type multivibrator à deux transistors (34, 35) se bloquant et se débloquant en même temps et dont la période et le rapport cyclique des impulsions de sortie en tout ou rien sont déterminés par les temps de charge et de décharge d'un condensateur (42), un circuit de temporisation (23) à condensateur (45) capable de modifier ladite période en agissant sur le temps de charge et/ou le temps de décharge du condensateur (42) dudit modulateur (22), un détecteur à diode (43) détectant l'amplitude des oscillations de l'oscillateur (21) et agissant sur le circuit de temporisation (23) et une source en énergie électrique autonome (16), ce capteur (14) étant tel que lorsque ledit corps (18) est à proximité immédiate de l'oscillateur (21) ce dernier est bloque ou n'oscille pas, lorsque ledit corps (18) quitte la proximité immédiate de l'oscillateur (21) la modulation des oscillations de l'oscillateur imposée par le modulateur (22) correspond au rythme propre du modulateur pendant un temps limité par le circuit de temporisation (23) et lorsque ledit corps (18) est absent de la proximité immédiate de l'oscillateur (21) le rythme des oscillations de l'oscillateur correspond au rythme du modulateur (22) modifié par le circuit de temporisation (23).

20. Système selon l'une des revendications 10 à 18, caractérisé par le fait que le dispositif d'exploitation (15) comprend une source d'énergie électri-

19   **0 050 299**   20

que autonome (17), un récepteur (49) de signaux radioélectriques ou électromagnétiques, un décodeur (51) des signaux reçus capable de fournir à sa sortie des informations relatives à la position et/ou aux changements de position dudit corps (18) par rapport audit oscillateur (21) et un séquenceur (52), le récepteur (49) comprenant un étage oscillateur local (53), un étage mélangeur (54) connecté à l'oscillateur local (53) et à un étage haut fréquence (57), un ou plusieurs étages d'amplification à fréquence intermédiaire (55, 56) et un détecteur ou un étage de détection (86), ces différents étages étant du type à transistor et étant montés électriquement en série entre les pôles de la source d'alimentation électrique (17) de telle sorte que le courant moyen de polarisation des étages est le même pour chaque étage et le courant collecteur moyen traversant les étages est le même pour chaque étage, le récepteur (49) étant tel que le signal fourni par le détecteur (86) au décodeur (51) correspond à la modulation du signal reçu par le récepteur, et le séquenceur (52) étant tel qu'il établit et coupe successivement l'alimentation en énergie électrique du récepteur (49) et du décodeur (51) selon un rythme veille-arrêt compatible avec le rythme des oscillations de l'oscillateur (21) du capteur (14).

21. Système selon la revendication 20, caractérisé par le fait que le décodeur (51) comprend des moyens capables d'imposer une veille prolongée au séquenceur (52) lorsqu'il reçoit un signal issu du récepteur (49).

22. Système selon l'une des revendications 20 et 21, caractérisé par le fait que le séquenceur (52) comprend une entrée par un ordre extérieur lui commandant une veille prolongée.

23. Application du procédé selon l'une quelconque des revendications 1 à 9, ou du système selon l'une quelconque des revendications 10 à 22, à la centralisation d'informations relatives à des éléments ou des corps mobiles situés dans des locaux de manière à gérer la protection et les automatismes mis en oeuvre dans ceux-ci.

**Patentansprüche**

1. Verfahren zur elektromagnetischen Detektion der Lage eines Körpers (18) in bezug zu einem elektromag-Oszillator (21) und zur drahtlosen Übertragung eines Signals für die Bewegungen oder die Lage des erwähnten Körpers (18) an eie Auswertungsvorrichtung (15), dadurch gekennzeichnet, dußes darin besteht,

die Amplitudenschwankung des erwähnten Oszillators (21) festzustellen, die durch eine Verlagerung des Körpers (18) erzeugt wird, der sich aus einer bestimmten Ausgangslage entfernt, für die sich der Oszillator (21) in einem ersten Betriebszustand befunden hat;

diesen ersten Betriebszustand in Erwiderung auf die festgestellte Amplitudenschwankung zu verändern, sodaß der Oszillator (21) in einen zweiten Betriebszustand versetzt wird;

und an der Auswertungsvorrichtung (15) die von dem erwähnten Oszillator (21) abgegebenen drahtlosen Signale zu empfangen, um hieraus Informationen über die Verlagerung und/oder die Lage des Körpers (18) in bezug auf seine Ausgangslage herzuleiten, die jeweils dem ersten und dem zweiten Betriebszustand des Oszillators (21) entsprechen.

2. Verfahren gemäß dem Patentanspruch 1, dadurch gekennzeichnet, daß der zweite Betriebszustand des Oszillators (21) vorübergehend ist.

3. Verfahren gemäß dem Patentanspruch 2, dadurch gekennzeichnet, daß nach dem zweiten Betriebszustand der Oszillator in einen dritten Betriebszustand gebracht wird, der der neuen Lage des Körpers (18) entspricht.

4. Verfahren gemäß einem der vorherigen Patentansprüche, dadurch gekennzeichnet, daß der Übergang des Oszillators (21) von seinem ersten Betriebszustand in seinen zweiten Betriebszustand durch die Dauer seines ersten Betriebszustandes bestimmet wird.

5. Verfahren gemäß einem der Patentansprüche 2, 3 und 4, dadurch gekennzeichnet, daß die Auswertungsvorrichtung (15) in der Lage ist, gleichzeitig die verschiedenen Betriebszustände zu deuten, die von mehreren Oszillatoren kommen.

6. Verfahren gemäß einem der vorherigen Patentansprüche, dadurch gekennzeichnet, daß der Oszillator bei Anwesenheit oder Abwesenheit des Körpers (18) in der Nähe des Oszillators (21) gesperrt ist.

7. Verfahren gemäß einem der vorherigen Patentansprüche, dadurch gekennzeichnet, daß der Oszillator derart betrieben wird, daß seine Schwingungen in alles oder nichts gepulste Schwingungen sind, und daß ebenfalls die Auswertungsvorrichtung sequentiell in Überwachung-Stillstand nach einem Zeitzyklus im Verhältnis zu den Betriebszuständen des Oszillators betrieben wird.

8. Verfahren gemäß dem Patentanspruch 7, dadurch gekennzeichnet, daß die Auswertungsvorrichtung nach dem Empfang eines drahtlosen Signals an ihrem Empfänger in anhaltendem Überwachungszustand betrieben wird, wobei die Dauer dieser Phase der anhaltendem Überwachung von der Bedeutung des empfangenen Signals bestimmt werden kann.

9. Verfahren gemäß dem Patentanspruch 7, dadurch gekennzeichnet, daß die Auswertungsvorrichtung auf einen Befehl von außen in anhaltendem Überwachungszustand betrieben wird.

10. System zur elektromagnetischen Detektion der Lage eines Körpers (18) durch einen Meßfühler (14), der einen elektromagnetischen Oszillator (21) und einen Amplitudenmeßfühler (24) enthält, und zur drahtlosen Übertragung eines Signals an eine Auswertungsvorrichtung (15), die einen drahtlosen Empfänger (49) enthält und Informationen über die Bewegungen und/oder die Lage des erwähnten Körpers (18) in bezug auf den erwähnten Oszillator (21) bereitstellt, um das Verfahren gemäß einem der vorherigen Patentansprüche einzusetzen, dadurch gekennzeichnet, daß

der erwähnte Meßfühler (14) einen Modulator (22) enthält, der mit dem Oszillator (21) verbunden ist, um die Schwingungen des letzteren zu modulieren, wobei der Amplitudenmeßfühler (21) einerseits mit dem Oszillator (21) verbunden ist, um die Amplitudenschwankungen der Schwingungen zu erfassen, wenn sich der Körper (18) aus einer bestimmten Ausgangslage in bezug auf den Oszillator (21) verlagert, und andererseits mit dem Modulator (22) verbunden ist, um ihn in einen ersten Betriebszustand zu versetzen, wenn sich der Körper (18) in der erwähnten bestimmten Lage befindet, und ihn in einen zweiten Betriebszustand zu versetzen, wenn sich der Körper (18) aus der erwähnten bestimmten Lage entfernt hat;

wobei die Auswertungsvorrichtung (15), deren drahtloser Empfänger (49) auf die von dem erwähnten Oszillator (21) abgegebenen drahtlosen Signale anspricht, Mittel (51) zur Deutung dieser Signale enthält, um hieraus Informationen über die Verlagerung und/oder die Lage des erwähnten Körpers (18) in bezug auf seine Ausgangslage herzuleiten, die jeweils dem ersten und dem zweiten Betriebszustand des Oszillators (21) entsprechen.

11. System gemäß dem Patentanspruch 10, dadurch gekennzeichnet, daß der Modulator (22) Mittel enthält, mit denen es möglich ist, nach einer Ortsveränderung des erwähnten Körpers (18) den ersten Betriebszustand des Oszillators vorübergehend zu verändern.

12. System gemäß dem Patentanspruch 11, dadurch gekennzeichnet, daß der Modulator (22) Mittel enthält, um den Oszillator in einen dritten Betriebszustand zu versetzen, der der neuen Lage des Körpers entspricht.

13. System gemäß einem der Patentansprüche 10—12, dadurch gekennzeichnet, daß der Modulator (22) Mittel enthält, um den Übergang des Oszillators (21) von seinem ersten Betriebszustand in seinen zweiten Betriebszustand von der Dauer seine ersten Betriebszustandes abhängig zu machen.

14. System gemäß einem der Patentansprüche 10—13, dadurch gekennzeichnet, daß der Oszillator (21) ein quarzstabilisierter Oszillator mit induktiver Rückkopplung ist, der durch die Anwesenheit des erwähnten Körpers (18) in der Nähe dieses Oszillators gesperrt wird.

15. System gemäß dem Patentanspruch 14, dadurch gekennzeichnet, daß der erwähnte Oszillator mit induktiver Rückkopplung zwei flache koaxiale Zylinderspulen enthält.

16. System gemäß einem der Patentansprüche 10—15, dadurch gekennzeichnet, daß der Modulator (22) Mittel enthält, die in Richtung auf den Oszillator (21) Signale erzeugen, damit die Modulation des Schwingungen des Oszillators (21) eine in alles oder nichts gepulste Modulation ist.

17. System gemäß einem der Patentansprüche 10—16, dadurch gekennzeichnet, daß die Auswertungsvorrichtung (15) einen Decodierer (51) der in der Lage ist, die vom Empfänger kommenden Signale abzutasten und an seinem Ausgang Informationen über die Bewegungen und/oder die Lage des erwähnten Körpers (18) in bezug auf den erwähnten Oszillator (21) zu erzeugen, und einen Folgeschalter (52) enthält, der in der Lage ist, den Empänger in Überwachungs-Stillstands-Zyklen zu versetzen.

18. System gemäß einem der Patentansprüche 10—17, dadurch gekennzeichnet, daß der Empfänger (49) eine örtliche Oszillationsstufe (53), eine Mischstufe (54), die in der Lage ist, die Schwingungen des örtlichen Oszillators (53) und die von einer Frequenzstufe (57) empfangenen Signale zu mischen, eine oder mehrere Zwischenfrequenz-Verstärkerstufen (55, 56) und einen Meßfühler oder eine Detektionsstufe (86) enthält, wobei diese Stufen elektrisch in Serie zwischen den Polen der Stromversorgung geschaltet sind und von demselben mittleren Strom durchströmt werden.

19. System gemäß dem Patentanspruch 10, dadurch gekennzeichnet, daß der Meßfühler (14) einen quarzstabilisierten und aus zwei flachen koaxialen Zylinderspulen (25, 27) gebildeten Oszillator mit induktiver Rückkopplung, einen Kippschaltungs-Modulator (22) mit zwei Transistoren (34, 35) die sich gleichzeitig sperren und entsperren und deren Periode und zyklisches Verhältnis der Ausgangsimpulse in alles oder nichts von der Lade- und der Entladungsdauer eines Kondensators (42) bestimmt werden, einen Verzögerungskreis (23) mit Kondensator (45), der in der Lage ist, die erwähnte Periode zu verändern, indem or auf die Lade- und/oder Entladungsdauer des Kondensators (42) des erwähnten Modulators (22) einwirkt, einen Dioden-Meßfühler (43), der die Schwingungsamplitude des Oszillators (21) erfaßt und auf den Verzögerungskreis (23) einwirkt, und eine netzunabhängige Stromquelle (16) enthält, wobei dieser Meßfühler (14) dergestelt ist, daß wenn siche der erwähnte Körper (18) in unmittelbarer Nähe des Oszillators (21) befindet, der letztere gesperrt ist oder nicht schwingt, daß wenn der erwähnte Körper (18) die unmittelbare Nähe des Oszillators (21) verläßt, die von dem Modulator (22) erzeugte Schwingungsmodulation des Oszillators während einer durch den Verzögerungskreis (23) begrenzten Zeit dem Eigenrhythmus des Modulators entspricht, und daß wenn der erwähnte Körper (18) aus der unmittelbaren Nähe des Oszillators (21) abwesend ist, der Rhythmus der Schwingungen des Oszillators dem durch den Verzögerungskreis (23) veränderten Rhythmus des Modulators (22) entspricht.

20. System gemäß einem der Patentansprüche 10—18, dadurch gekennzeichnet, daß die Auswertungsvorrichtung (15) eine netzunabhängige Stromquelle (17), einen Empfänger (49) für drahtlose oder elektromagnetische Signale, einen Decodierer für die empfangenen Signale, der in der Lage ist, an seinem Ausgang Informationen über die Lage und/oder die Ortsveränderungen des erwähnten Körpers (18) in bezug auf den erwähnten Oszillator (21) bereitzustellen, und einen Folgeschalter (52) enthält, wobei der Empfänger eine örtliche Oszillationsstufe (53), eine Mischstufe (54), die an den örtlichen Oszillators (53) und an eine Hochfrequenzstufe (57) angeschlossen ist, sowie eine oder mehrere Zwischenfrequenz-Verstärkerstufen (55, 56) und einen Meßfühler oder eine Detektionsstufe (86) enthält, wobei diese Stufen Transistorstufen sind und elektrisch in Serie zwischen den Polen der Stromversorgungsquelle (17) derart geschaltet sind, daß der mittlere Polarisationsstrom bei jeder Stufe gleich ist und der mittlere Kollektorstrom, der die Stufen durchströmt, bei jeder Stufe gleich ist, wobei der Empfänger (49) dergestalt ist, daß das von dem Meßfühler an den Decodierer (51) gelieferte Signal der Modulation des vom Empfänger empfangenen Signals entspricht, und wobei der Folgeschalter (52) dergestellt ist, daß er die Stromversorgung des Empfängers (49) und des Decodierers (51) nacheinander in einem Überwachungs-Stillstands-Rhythmus herstellt und unterbricht, der mit dem Schwingungsrhythmus des Oszillators (21) des Meßfühlers (14) vereinbar ist.

21. System gemäß dem Patentanspruch 20, dadurch gekennzeichnet, daß der Decodierer (51) Mittel enthält, die in der Lage sind, den Folgeschalter (52) in einen anhaltenden Überwachungszustand zu versetzen, wenn er ein vom Empfänger (49) kommendes Signal empfängt.

22. System gemäß einem der Patentansprüche 20 und 21, dadurch gekennzeichnet, daß der Folgeschalter (52) einen Eingang für einen Befehl von außen enthält, der bei ihm einen anhaltenden Überwachungszustand bewirkt.

23. Anwendung des Verfahrens gemäß einem der Patentansprüche 1—9 oder des Systems nach einem der Patentansprüche 10—22 auf die zentrale Erfassung von Informationen über in Räumlichkeiten befindliche bewegliche Elemente oder Körper, um für den Schutz und die automatischen Einrichtungen zu sorgen, die in diesen eingesetzt sind.

## Claims

1. Process for the electromagnetic detection of the position of a body (18) with respect to an electromagnetic oscillator (21) and for the transmission by radioelectric means to a user device (15) of a signal relating to the movements or the position of the said body (18), characterized in that it consists:

in detecting the variation in amplitude of the oscillations of the said oscillator (21) caused by a displacement of the body (18) away from a specified initial position for which the oscillator (21) is in a first operating state;

in modifying this first operating state in response to the detected variation in amplitude in order to put the oscillator (21) into a second operating state;

and in receiving on the user device (15) the radioelectric signals transmitted by the said oscillator (21) in order to deduce from them the information on the displacement and/or the position of the body (18) with respect to its initial position, which correspond with the first and second operating states of the oscillator (21).

2. Process according to Claim 1, characterized in that the second operating state of the oscillator (21) is temporary.

3. Process according to Claim 2, characterized in that, following the second operating state, the oscillator (21) is put into a third operating state which corresponds with the new position of the body (18).

4. Process according to any of the preceding claims, characterized in that the transition from the first operating state of the oscillator (21) to its second operating state is conditioned by the duration of its first operating state.

5. Process according to any of Claims 2, 3 and 4, characterized in that the user device (15) is capable of simultaneously interpreting the different operating states coming from several oscillators.

6. Process according to any of the preceding claims, characterized in that the oscillator (21) is cut off during the presence or absence of the body (18) in the proximity of the oscillator (21).

7. Process according to any of the preceding claims, characterized in that the oscillator (21) is made to operate in such a way that its oscillations are of on/off pulsed type and in that the user device is also made to operate sequentially in a standby/stop mode according to a time cycle in relation to the operating states of the oscillator.

8. Process according to Claim 7, characterized in that the user device is made to operate in prolonged standby mode following the reception of a radioelectric signal by its receiver, the duration of this prolonged standby phase being able to be conditioned by the significance of the received signal.

9. Process according to Claim 7, characterized in that the user device is made to operate in prolonged standby mode controlled by an external command.

10. System for the electromagnetic detection of the position of a body (18) by a sensor (14) including an electromagnetic oscillator (21) and an amplitude detector (24) and the transmission by radioelectric means of a signal to a user device (15) including a radioelectric receiver (49) and supplying data relating to the movements and/or the position of the said body (18) with respect to the said oscillator (21), for the purpose of implementing the process according to any of the preceding claims, characterized in that:

the said sensor (14) includes a modulator (22) connected to the oscillator (21) in such a way as to modulate the oscillations of that oscillator, the amplitude detector (21) being connected on the one hand to the oscillator (21) in order to detect the variations in amplitude of the oscillations when the body (18) moves from a specified initial position with respect to the oscillator (21) and, on the other hand, to the modulator (22) in order to impose on it a first operating state when the body (18) is in the said specified position and a second operating state when the body (18) is moved away from the said specified position;

the user device (15), whose radioelectric receiver (49) is sensitive to the radioelectric signals transmitted by the said oscillator (21), includes means (51) of interpreting these signals in order to deduce from them the data on the displacement and/or the position of the said body (18), with respect to its initial position which correspond with the first and second operating states of the said oscillator (21).

11. System according to Claim 10, characterized in that the modulator (22) includes means of temporarily modifying the first operating state of the oscillator (21) following a change of position of the said body (18).

12. System according to Claim 11, characterized in that the modulator (22) includes means of putting the oscillator into a third operating state which corresponds with the new position of the body.

13. System according to any of Claims 10 to 12, characterized in that the modulator (22) includes means of conditioning the transition of the oscillator (21) from its first operating state into its second operating state to the duration of its first operating state.

14. System according to any of Claims 10 to 13, characterized in that the said oscillator (21) is a quartz stabilized oscillator with feedback by magnetic coupling, the presence of the said body (18) in the proximity of this oscillator cutting it off.

15. System according to Claim 14, characterized in that the said oscillator of the type having feedback by magnetic coupling includes two flat coaxial solenoids (25, 27).

16. System according to any of Claims 10 to 15, characterized in that the modulator (22) includes means generating signals to the oscillator (21) such that the modulation of the oscillations of the oscillator (21) is of the on/off pulsed type.

17. System according to any of Claims 10 to 16, characterized in that the user device (15) includes a decoder (51) capable of analysing the signals coming from the receiver (49) and of generating at its output data relating to the position and/or the changes in position of the said body (18) with respect to the said oscillator (21) and a sequencer (52) capable of imposing standby/stop cycles on the receiver.

18. System according to any of Claims 10 to 17, characterized in that the receiver (49) includes a local oscillator stage (53), a mixer stage (54) capable of mixing the oscillations of the local oscillator (53) and the signals received by a frequency stage (57), one or more intermediate frequency amplification stages (55, 56) and a detector or detector stage (86), these stages being electrically connected in series between the poles of the electrical power supply and being passed through by the same average current.

19. System according to Claim 10, characterized in that the sensor (14) includes a quartz stabilized oscillator (21) of the type with feedback by magnetic coupling formed by two flat coaxial solenoids (25, 27), a modulator (22) of the multivibrator type with two transistors (34, 35) switching on and switching off at the same time and of which the period cyclic ratio of the on/off output pulses are determined by the charge and discharge time of a capacitor (42), a timing circuit (23) with a capacitor (45) capable of modifying the said period by altering the charge and/or discharge time of the capacitor (42) of the said modulator (22), a diode detector (43) detecting the amplitude of the oscillations of the oscillator (21) and acting on the timing circuit (23) and an independent source of electrical power (16), this sensor (14) being such that when the said body (18) is in the immediate proximity of the oscillator (21), the oscillator is cut off or does not oscillate, when the said body (18) leaves the immediate proximity of the oscillator (21) the modulation of the oscillations of the oscillator imposed by the modulator (22) corresponds with the modulator's own rhythm for a time limited by the timing circuit (23) and when the said body (18) is absent from the immediate proximity of the oscillator (21) the rhythm of the oscillations of the oscillator corresponds with the rhythm of the modulator (22) modified by the timing circuit (23).

20. System according to any of Claims 10 to 18, characterized in that the user device (15) includes an independent electrical power source (17), a receiver (49) of radioelectric or electromagnetic signals, a decoder (51) of the received signals capable of providing at its output data relating to the position and/or the changes in position of the said body (18) with respect to the said oscillator (21) and a sequencer (52), the receiver (49) including a local oscillator stage (53), a mixer stage (54) connected to the local oscillator (53) and a high frequency state (57), one or more intermediate frequency amplification stages (55, 56) and a detector or detector stage (86), these various stages being of transistor type and being connected electrically in series between the poles of the electrical power source (17) such that the average bias current of the stages is the same for each stage and the average collector current passing through the stages is the same for each stage, the receiver (49) being such that the signal provided by the detector (86) to the decoder (51) corresponds with the modulation of the signal received by the receiver, and the sequencer (52) being such that it successively establishes and cuts off the electrical power supply of the receiver (49) and of the decoder (51) according to a standby/stop rhythm compatible with the rhythm of the oscillations of the oscillator (21) of the sensor (14).

21. System according to Claim 20, characterized in that the decoder (51) includes means capable of imposing a prolonged standby on the sequencer (52) when it receives a signal coming from the receiver (49).

22. System according to either of Claims 20 or 21, characterized in that the sequencer (52) includes one input by an external command commanding it to have a prolonged standby.

23. Application of the process according to any of Claims 1 to 9, or of the system according to any of Claims 10 to 22, to the centralization of data relating to moving elements or bodies situated in premises in order to manage the protection and the automated operations implemented in them.

**0 050 299**

## FIG.1

## FIG.2

## FIG.3

## FIG.4

## FIG.5